# EUROPEAN PATENT APPLICATION

(11) **EP 1 108 491 A2**
(43) Date of publication of application: **20.06.2001**
(21) Application number: 00126682.4
(22) Date of filing: 05.12.2000
(51) Int. Cl.: B23K 9/26

(54) **Contact tip for mig welding torches**

(30) Priority: 17.12.1999 IT VI990261
(71) Applicant: TRAFIMET S.P.A., 36020 Castegnero (VI) (IT)
(72) Inventor: Zigliotto, Giuseppe, 36023 Longare VI (IT)
(74) Representative: La Ciura, Salvatore

(57) **Abstract**

A contact tip for MIG welding torches, comprising a body (1) having connection means (2) for fastening said body to a welding torch and an axial hole (5) for feeding the wire (7), said contact tip being provided with a V-shaped notch (4) which extends from the outer wall to the axis, said axial hole (5) leading to the bottom of said notch.

The bottom of said notch (4) is inclined and it deviates towards the axis adjacent to the nozzle.

The contact tip of the invention is provided with pressing means (8) fitting inside said notch (4) to press the welding wire (7) against the notch bottom and walls, that consist of a spring (9) fitting into said notch (4) and resting on the welding wire (7), said spring having means (10) for coupling with the tip body.

## Description

The present invention relates to a contact tip for welding torches and the production method thereof.

The contact tip of the invention, preferably produced by moulding, is characterised in that it has a first portion with an axial hole to let the welding wire through and a second portion, adjacent to the nozzle, which has a deep notch extending substantially to or adjacent to the axis.

The welding wire is fed through said axial hole and runs on the bottom of said notch, the walls of which are V-shaped.

To provide constant and good contact between the wire and the tip body, the bottom of said notch is inclined, or rather the outlet point of the welding wire is misaligned relative to the contact tip, so that the welding wire is forced to run always in contact with the wall of the contact tip, thus providing the necessary electrical continuity.

As known, MIG welding torches have a copper nozzle, or contact tip, simultaneously guiding the welding wire and acting as a contact element which supplies the current necessary for welding.

This contact tip, the length and diameter of which are variable, is crossed by an axial hole along which the electrode is fed, said electrode consisting of a wire of copper plated steel or the like.

Contact tips can be provided by machining a solid piece or from a tubular element.

However, machining a solid piece takes an extremely long time, particularly due to the difficulty in following as precisely as necessary an axial hole along the whole piece length, which would unacceptably increase the production costs.

For this reason prior art contact tips are made out of a tubular element which is machined to shape it as necessary.

However, this solution has some functional and cost problems, too.

As a matter of fact, also the cost of the tubular element is too high for this kind of products.

Moreover, since the contact between the tip and the wire occurs mainly at the outlet, the nozzle of the tubular element often wears away or, anyway, the tubular element fouls and, therefore, it does not provide full electrical conductivity.

Consequently, the need is felt in the field for contact tips which can overcome the above described drawbacks and, in particular, for contact tips which provide sufficient and continuous contact with the wire upon welding, and which are easy and cheap to manufacture.

Also the production cost is a long felt problem especially when considering that contact tips are expendable material and must be replaced frequently. To solve the above mentioned problem, the present invention provides a contact tip having a base which is crossed by an axial hole, has limited length and is combined with a flared and preferably truncated conical nozzle, in which a deep notch extends to the axis of the contact tip.

The bottom of this notch provides a channel connected with the axial hole in the nozzle, whereby the wire which is guided through said axial hole then runs on the bottom, always being in contact with the body.

The present invention will be described in detail, by way of non restrictive example, with reference to the accompaying drawings in which:
- Figures 1 and 2 are sectional views taken along the axis of the contact tip of the invention;
- Figure 3 is a sectional view taken along the axis of the nozzle of the invention, with the welding wire;
- Figures 4 and 5 schematically show some attachments which can be fitted on the contact tip to improve the electrical contact with the wire;
- Figure 6 is a perspective view of the contact tip of the invention.

With reference to the accompanying drawings, the contact tip of the invention comprises a substantially cilindrical body, shown with numeral 1, being provided with a threaded coupling 2 for fastening the contact tip to a welding torch and having in its front a tapered or frusto-conical part shown by numeral 3.

The body 1 has a notch 4 with V-inclined walls along almost the whole of its length, said notch extending deeply to the tip axis.

The base is provided with an axial hole 5 having a conical access 6 which at the front leads to the bottom of the notch 4.

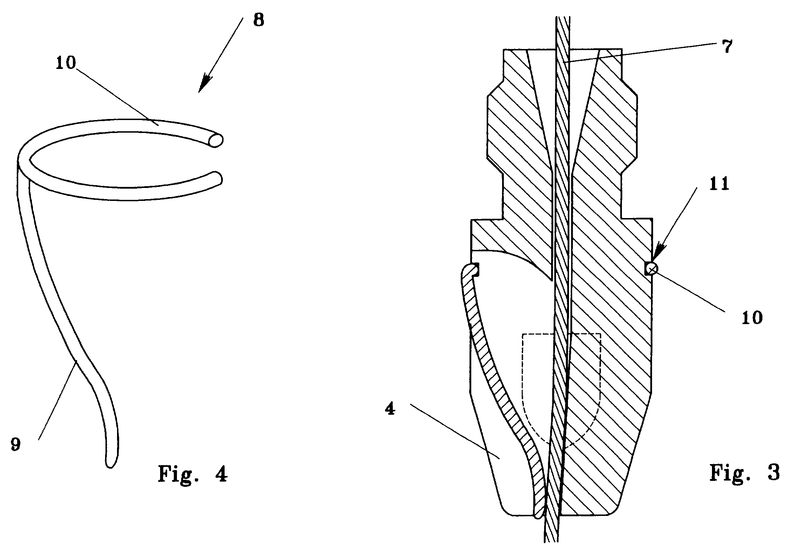

The hole 5 provides a passage for feeding the welding wire shown with numeral 7 in Figure 3, said wire being inserted into the nozzle through a conical access 6, passing through the hole 5 and getting out at the bottom of the notch 4.

The notch inclined walls facilitate the electrical contact between the wire 7 and the tip.

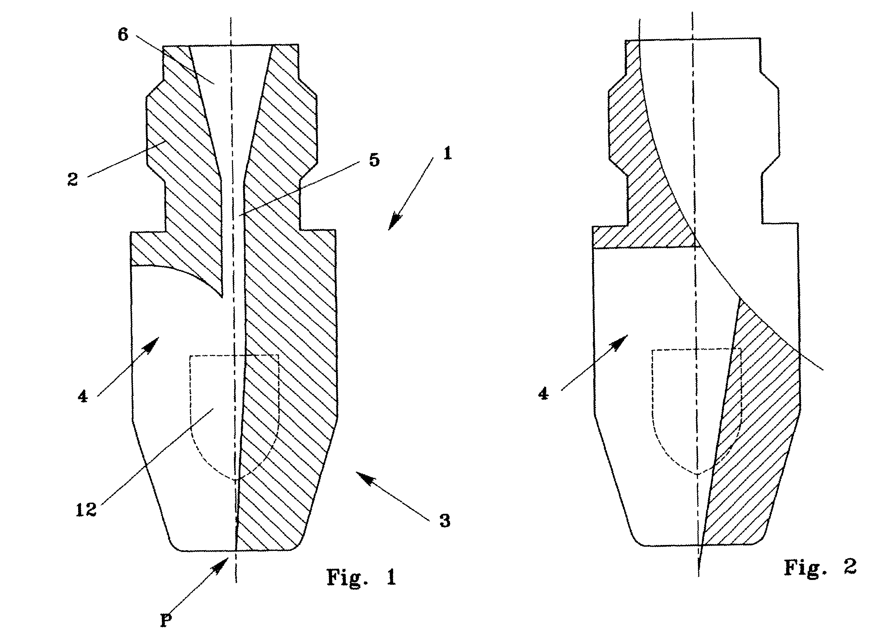

However, in order to provide good electrical contact, according to the invention the notch bottom is inclined to deviate and cross the axis adjacent to the nozzle, so that the wire outlet, shown with P in Figure 1, is eccentric relative to the axis.

The greater the dimensional tolerance between the hole 5 and the welding wire 7 is, the greater this inclination will be.

As a matter of fact, if the hole 5 is quite precise, the wire is guided substantially along the axis, whereby a slight inclination of the notch bottom is sufficient to ensure that the wire runs along the notch walls.

On the contrary, if tolerances are greater, a greater inclination is necessary to ensure that the wire engages anyway the notch bottom and is slightly deviated.

According to another preferred embodiment of the invention, the tip can be combined with a pressing element, shown with numeral 8 in figure 4, consisting of a spring or the like fastened to a resilient ring 10 fitting in a corresponding groove 11 in the tip body, the free end of the spring 9 inserting inside the notch 4 and pressing against the wire 7 to keep said wire 7 in contact with the notch bottom and walls.

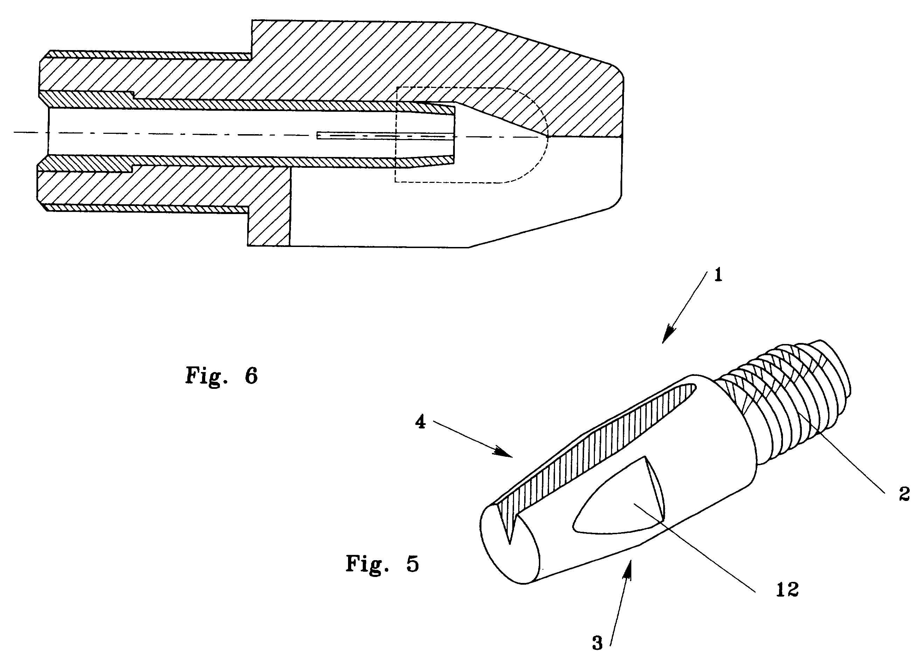

A similar result can be obtained with the example of figure 5, in which the pressing spring is provided from a tip of steel band guiding the wire.

This solution allows standardization for the various wire diameters 0.8-1.6 mm.

In this case the steel tip has some notches in its end portion so as to open depending on the diameter of the wire which has to pass therethrough.

In this embodiment the steel spring can be recovered to be used with a plurality of contact tips, since it is simply inserted in the contact tip with a tooth or locking projection.

Finally, two parallel flat portions 12 can be provided on the outer surface of the nozzle, said flat portions engaging a tool, such as a key or the like, used to tighten the tip on the torch body.

The contact tip of the invention can be easily produced by moulding and then finished with the axial hole 5.

Since the tip has limited length, it can be produced with high-speed machines, while maintaining at the same time the necessary precision.

A further advantage of the contact tip of the invention is the possibility of better tip cooling, due to the larger exchange surfaces and to the fact that the cooling gas can reach, through the notch 4, also the nozzle inside. Moreover, possible spits of the welding material depositing themselves on the tip can be removed more easily, since the tip is accessible from outside for cleaning operations.

A contact tip for MIG welding torches has thus been provided which is cheap to manufacture and which can provide perfect and continuous electrical contact with the welding wire.

Those skilled in the art can then provide several modifications and variations, all of which, however, fall within the scope of the present invention.

## Claims

1. A contact tip for MIG welding torches, comprising a body (1) having connection means (2) for fastening said body to a welding torch and an axial hole (5) for feeding the wire (7), characterised in that it is provided with a notch (4) which extends from the outer wall to the axis, said axial hole (5) leading to the bottom of said notch.

2. A contact tip for welding torches according to claim 1, characterised in that the bottom of said notch (4) is inclined and it deviates towards the axis adjacent to the nozzle.

3. A contact tip for welding torches according to claim 2, characterised in that the walls of said notch (4) are V-inclined.

4. A contact tip for welding torches according to any of the preceding claims, characterised in that said axial hole (5) has a conical access (6).

5. A contact tip for welding torches according to any of the preceding claims, characterised in that it is provided with pressing means (8) fitting inside said notch (4) to press the welding wire (7) against the notch bottom and walls.

6. A contact tip for welding torches according to claim 5, characterised in that said pressing means (8) consist of a spring (9) fitting into said notch (4) and resting on the welding wire (7), said spring having means (10) for coupling with the tip body.

7. A contact tip for welding torches according to any of the preceding claim, characterised in that the system for guiding the welding wire is obtained from a tip produced from a band spring opening as a tulip in its end portion, letting different wire diameters through.

8. A contact tip for welding torches according to any of the preceding claim, characterised in that it is produced by moulding.
